# EUROPEAN PATENT APPLICATION

(11) **EP 3 965 440 A1**
(43) Date of publication of application: **09.03.2022**
(21) Application number: 20798465.9
(22) Date of filing: 16.04.2020
(51) Int. Cl.: H04W 4/40

(54) **SIDELINK COMMUNICATION METHOD AND APPARATUS, AND STORAGE MEDIUM**

(30) Priority: 30.04.2019 CN 201910370840
(71) Applicant: ZTE Corporation, shenzhen Guangdong 518057 (CN)
(72) Inventor: WANG, Mengzhen, Shenzhen, Guangdong 518057 (CN); CHEN, Lin, Shenzhen, Guangdong 518057 (CN)
(74) Representative: Aipex B.V.
(86) International application number: PCT/CN2020/085072
(87) International publication number: WO 2020/221015

(57) **Abstract**

Provided are a sidelink communication method and apparatus, and a storage medium. The sidelink communication method includes: sending sidelink communication assistance information to a base station; and receiving sidelink communication configuration information sent by the base station.

## Description

This application claims priority to Chinese Patent Application No. 201910370840.X filed with the China National Intellectual Property Administration (CNIPA) Apr. 30, 2019, the disclosure of which is incorporated herein by reference in its entirety.

### TECHNICAL FIELD

The present application relates to the field of wireless communication networks, for example, to a sidelink communication method and apparatus, and a storage medium.

### BACKGROUND

The Vehicle to everything (V2X) communication based on New Radio (NR) supports the unicast communication as well as the acknowledged mode (AM) of radio link control (RLC). A user equipment (UE) in the RRC connected state is configured with a sidelink radio bearer by a base station, and a UE in the out-of-coverage state establishes a sidelink radio bearer according to pre-configuration information. When two UEs in sidelink unicast communication are under different base stations, the problem of sidelink radio bearer configuration conflict may occur.

### SUMMARY

The present application provides a sidelink communication method and apparatus, and a storage medium.

An embodiment of the present application provides a sidelink communication method. The sidelink communication method includes the steps described below.

Sidelink communication assistance information is sent to a base station.

Sidelink communication configuration information sent by the base station is received.

An embodiment of the present application provides a sidelink communication method. The sidelink communication method includes the steps described below.

Sidelink communication configuration information sent by a first UE is received.

Sidelink communication configuration response information is sent to the first UE.

An embodiment of the present application provides a sidelink communication method. The sidelink communication method includes the steps described below.

Sidelink communication configuration information is acquired.

Sidelink communication is performed according to the sidelink communication configuration information.

An embodiment of the present application provides a sidelink communication apparatus. The sidelink communication apparatus includes a first sending module and a first receiving module.

The first sending module is configured to send sidelink communication assistance information to a base station.

The first receiving module is configured to receive sidelink communication configuration information sent by the base station.

An embodiment of the present application provides a sidelink communication apparatus. The sidelink communication apparatus includes a second receiving module and a second sending module.

The second receiving module is configured to receive sidelink communication configuration information sent by a first UE.

The second sending module is configured to send sidelink communication configuration response information to the first UE.

An embodiment of the present application provides a sidelink communication apparatus. The sidelink communication apparatus includes an acquisition module and a communication module.

The acquisition module is configured to acquire sidelink communication configuration information.

The communication module is configured to perform sidelink communication according to the sidelink communication configuration information.

An embodiment of the present application provides a storage medium. The storage medium is configured to store a computer program which, when executed by a processor, implements any one of the methods in the embodiments of the present application.

### BRIEF DESCRIPTION OF DRAWINGS

FIG. 1 is a schematic diagram of a V2X communication scenario;
FIG. 2 is a flowchart of a sidelink communication method according to an embodiment of the present application;
FIG. 3 is a flowchart of another sidelink communication method according to an embodiment of the present application;
FIG. 4 is a flowchart of yet another sidelink communication method according to an embodiment of the present application;
FIG. 5 is a schematic diagram of interaction in a sidelink communication method according to an embodiment of the present application;
FIG. 6 is a schematic diagram of interaction in another sidelink communication method according to an embodiment of the present application;
FIG. 7 is a schematic diagram of interaction in yet another sidelink communication method according to an embodiment of the present application;
FIG. 8 is a structural block diagram of a sidelink communication apparatus according to an embodiment of the present application;
FIG. 9 is a structural block diagram of another sidelink communication apparatus according to an embodiment of the present application;
FIG. 10 is a structural block diagram of yet another sidelink communication apparatus according to an embodiment of the present application; and
FIG. 11 is a structural diagram of a device according to an embodiment of the present application.

### DETAILED DESCRIPTION

Embodiments of the present application are described hereinafter in detail in conjunction with the drawings. If not in collision, the embodiments described herein and the features thereof can be combined with each other.

The vehicle-to-everything refers to a large system network for wireless communication and information exchange between a vehicle and X (X: a vehicle, a pedestrian, infrastructure or the Internet) in accordance with an agreed communication protocol and data interaction standards. The vehicle-to-everything communication ensures the driving safety of the vehicle, improves the transport efficiency, and provides the vehicle with convenience or entertainment information. According to the objects involved in wireless communication, the vehicle-to-everything communication incorporates three different types of communication: vehicle-to-vehicle (V2V), vehicle-to-infrastructure/vehicle-to-network (V2I/V2N), and vehicle-to-pedestrian (V2P). These three types of vehicle-to-everything communication are collectively referred to as V2X communication.

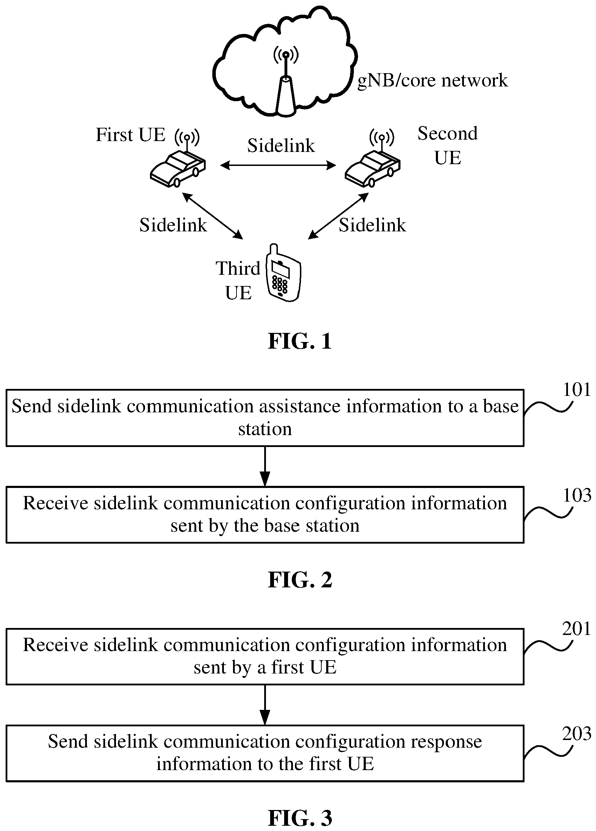

In the research on V2X communication based on long term evolution (LTE) conducted by the 3rd Generation Partnership Project (3GPP), the V2X communication method based on the sidelink between UEs is one way of implementing V2X standards, that is, service data is directly transmitted to a destination UE from a source UE over an air interface, in which forwarding through a base station and a core network is not required. FIG. 1 is a schematic diagram of a V2X communication scenario. As shown in FIG. 1, the first UE, the second UE, and the third UE can communicate with each other directly through the sidelink with no need for forwarding through the base station and the core network. This type of V2X communication is called PC5-based V2X communication or V2X sidelink communication for short.

With the development of communication technologies and the automation industry, the V2X communication scenario is further expanded and imposes higher performance requirements. 3GPP has approved the research on vehicle-to-everything communication based on the 5th generation mobile communication technology (5G) in advanced V2X services, including vehicle-to-everything communication based on a 5G air interface and vehicle-to-everything communication based on a 5G sidelink. The V2X sidelink communication based on NR supports the sidelink unicast communication as well as the RLC AM. A UE in the connected state is configured with a sidelink bearer by a base station, and a UE in the out-of-coverage state establishes an SLRB according to pre-configuration information. When two UEs in sidelink unicast communication are under different base stations, the problem of SLRB configuration conflict may occur.

In order to avoid the problem of SLRB configuration conflict, the embodiment of the present application provides a sidelink communication method. After a UE (first UE, denoted as UE1) establishes an SLRB, the UE sends sidelink communication configuration information to a peer UE (second UE, denoted as UE2) which establishes communication with the UE, so as to avoid the conflict with sidelink communication configuration information corresponding to the SLRB of the peer UE.

FIG. 2 is a flowchart of a sidelink communication method according to an embodiment of the present application. As shown in FIG. 2, the method provided in this embodiment includes steps 101 to 103.

In step 101, sidelink communication assistance information is sent to a base station.

In step 103, sidelink communication configuration information sent by the base station is received.

The sidelink communication configuration information is acquired by the base station according to the sidelink communication assistance information. The method of this embodiment of the present application is illustrated within the scenario where the first UE and the second UE employ a uni-directional SLRB indication.

In an embodiment, the sidelink communication assistance information includes sidelink service related information.

The sidelink service related information includes one or more of: a protocol data unit (PDU) session identifier, a quality of service flow identifier (QFI), a QFI associated priority, a QFI associated data rate, a QFI associated latency, a QFI associated reliability, or a QFI associated communication range.

In an embodiment, the sidelink service related information further includes: one or more sets of sidelink service related information associated with a first identifier and a second identifier or one or more sets of sidelink service related information associated with the second identifier.

In an embodiment, the sidelink communication assistance information further includes one or more of: a data bearer type indication, a signalling bearer type indication, a signalling bearer priority, a signalling bearer identifier, or a signalling transmission indication. The sidelink communication assistance information may be assistance information for the first identifier and the second identifier, or may be assistance information for the second identifier.

In an embodiment, the sidelink communication configuration information includes SLRB configuration information, where the SLRB configuration information includes signalling bearer configuration information and/or data bearer configuration information.

In an embodiment, the SLRB configuration information includes: configuration information of one or more SLRBs associated with a first identifier and a second identifier or configuration information of one or more SLRBs associated with the second identifier. The first identifier is a source layer 2 (L2) identifier (ID) or a source access stratum (AS) layer UE ID, and the second identifier is a destination L2 ID or a destination AS layer UE ID.

In an embodiment, the SLRB configuration information includes data bearer configuration information, where the data bearer configuration information includes one or more of: a uni-directional SLRB indication or a bi-directional SLRB indication, or an RLC mode indication.

In an embodiment, the SLRB configuration information includes signalling bearer configuration information, where the signalling bearer configuration information includes one or more of: a uni-directional SLRB indication or a bi-directional SLRB indication, a bearer identifier, a logic channel identifier, a logic channel priority, a type of signaling associated with a bearer, or a bearer associated signalling priority.

In an embodiment, in a case where an SLRB is in an RLC AM and is a uni-directional SLRB, the SLRB configuration information further includes a logic channel identifier of a feedback bearer, where the feedback bearer is a bearer used for sending an RLC state report corresponding to a data packet on the SLRB. The sidelink includes a signalling bearer and a data bearer, that is, in a case where the signalling bearer is in an RLC AM and is a uni-directional bearer, the signalling bearer configuration information includes a logic channel identifier of the feedback bearer, and in a case where the data bearer is in an RLC AM and is a uni-directional bearer, the data bearer configuration information includes a logic channel identifier of the feedback bearer.

In an embodiment, after the sidelink communication configuration information sent by the base station is received, the method further includes the steps described below.

The SLRB configuration information is sent to a second UE.

SLRB configuration response information sent by the second UE is received.

In an embodiment, in a case where an SLRB is in an RLC AM and is a uni-directional SLRB, the SLRB configuration information further includes a logic channel identifier of a feedback bearer, where the feedback bearer is a bearer used for sending an RLC state report corresponding to a data packet on the SLRB.

In an embodiment, the SLRB configuration response information includes one or more of: a list of identifiers of bearers to be accepted, a list of identifiers of bearers rejected, or a rejection cause.

In an embodiment, in a case where an SLRB is in an RLC AM and is a uni-directional SLRB, the SLRB configuration response information further includes a logic channel identifier of a feedback bearer, where the feedback bearer is a bearer used for sending an RLC state report corresponding to a data packet on the SLRB.

In an embodiment, after the SLRB configuration response information sent by the second UE is received, the method further includes the step described below.

A radio resource control (RRC) reconfiguration completion message is sent to the base station, where the RRC reconfiguration completion message includes one or more of: a list of identifiers of bearers to be accepted, a list of identifiers of bearers rejected, or a rejection cause.

In an embodiment, in a case where a first UE enters an RRC connected state from an RRC idle state, an RRC inactive state or an out-of-coverage state, the sidelink communication assistance information further includes information of an SLRB which has been established when the first UE in the RRC idle state, the RRC inactive state or the out-of-coverage state, where the information of the SLRB includes one or more of: a logic channel identifier of the SLRB, a bearer identifier, a second identifier associated with a bearer, a first identifier and a second identifier associated with a bearer, a mapping relationship between a bearer and a QFI, a uni-directional SLRB indication or a bi-directional SLRB indication, an RLC mode indication, or a bearer configuration. The bearer configuration includes one or more of: a packet data converge protocol (PDCP) configuration, an RLC configuration, or a logic channel configuration.

In an embodiment, the sidelink communication configuration information includes a logic channel group identifier to which a logic channel of the SLRB belongs.

In an embodiment, the sidelink communication configuration information further includes SLRB configuration update information, where the SLRB configuration update information is information obtained after updating any configuration information of an established SLRB.

In an embodiment, the first identifier is a source L2 ID or a source AS layer UE ID, and the second identifier is a destination L2 ID or a destination AS layer UE ID.

In an embodiment, FIG. 3 is a flowchart of another sidelink communication method according to an embodiment of the present application. As shown in FIG. 3, the method provided in this embodiment includes steps 201 to 203.

In step 201, sidelink communication configuration information sent by a first UE is received.

In step 203, sidelink communication configuration response information is sent to the first UE.

In an embodiment, the sidelink communication configuration information includes SLRB configuration information, where the SLRB configuration information includes signalling bearer configuration information and/or data bearer configuration information.

In an embodiment, the SLRB configuration information includes configuration information of one or more SLRBs associated with a first identifier and a second identifier or configuration information of one or more SLRBs associated with the second identifier.

In an embodiment, the signalling bearer configuration information includes one or more of: a uni-directional SLRB indication or a bi-directional SLRB indication, a bearer identifier, a logic channel identifier, a logic channel priority, a type of signaling associated with a bearer, or a bearer associated signalling priority.

In an embodiment, the data bearer configuration information includes one or more of: a uni-directional SLRB indication or a bi-directional SLRB indication, or an RLC mode indication.

In an embodiment, in a case where a signalling bearer or a data bearer is in an RLC AM and is a uni-directional SLRB, the SLRB configuration information further includes a logic channel identifier of a feedback bearer, where the feedback bearer is a bearer used for sending an RLC state report corresponding to a data packet on the signalling bearer or the data bearer.

In an embodiment, the sidelink communication configuration response information includes SLRB configuration response information, where the SLRB configuration response information includes one or more of: a list of identifiers of bearers to be accepted, a list of identifiers of bearers rejected, or a rejection cause.

In an embodiment, in a case where a signalling bearer or a data bearer is in an RLC AM and is a uni-directional SLRB, the SLRB configuration response information further includes a logic channel identifier of a feedback bearer, where the feedback bearer is a bearer used for sending an RLC state report corresponding to a data packet on the signalling bearer or the data bearer.

In an embodiment, after the sidelink communication configuration response information is sent to the first UE, the method further includes the steps described below.

Data sent by the first UE through a bearer is received.

In a case where the bearer is in an RLC AM and is a uni-directional SLRB, a second UE sends an RLC state report through a feedback bearer.

In an embodiment, the RLC state report includes one or more of: a logic channel identifier of a data bearer corresponding to the RLC state report, a second identifier associated with the data bearer corresponding to the RLC state report, or a first identifier associated with the data bearer corresponding to the RLC state report and the second identifier associated with the data bearer corresponding to the RLC state report.

In an embodiment, after the sidelink communication configuration information sent by the first UE is received, the method further includes the following steps: sidelink communication assistance information is sent to a base station, and sidelink communication configuration information sent by the base station is received.

In an embodiment, the sidelink communication assistance information includes one or more of: a list of an idle logic channel identifier, a bearer type indication, or a signalling transmission indication.

In an embodiment, the sidelink communication assistance information includes one or more of: a list of an idle logic channel identifier, received SLRB configuration information sent by the first UE, a uni-directional SLRB indication or a bi-directional SLRB indication, a signalling bearer indication, a data bearer indication, or a signalling transmission indication.

In an embodiment, the sidelink communication configuration information includes one or more of: a bearer identifier, a logic channel identifier, a logic channel priority, a type of signaling associated with a bearer, a bearer associated signalling priority, or a uni-directional SLRB indication or a bi-directional SLRB indication.

In an embodiment, the sidelink communication method further includes the following step: an access stratum layer UE identifier of the first UE sent by the first UE through a direct communication request message or a sidelink RRC signalling message.

In an embodiment, the sidelink communication method further includes the following step: an access stratum layer UE identifier of the second UE is sent to the first UE through a direct communication accept message or a sidelink RRC signalling message.

In an embodiment, after the sidelink communication configuration response information is sent to the first UE, the method further includes the step described below.

A media access control (MAC) PDU sent by the first UE is received, where an MAC subheader of the MAC PDU includes the access stratum layer UE identifier of the first UE and the access stratum layer UE identifier of the second UE.

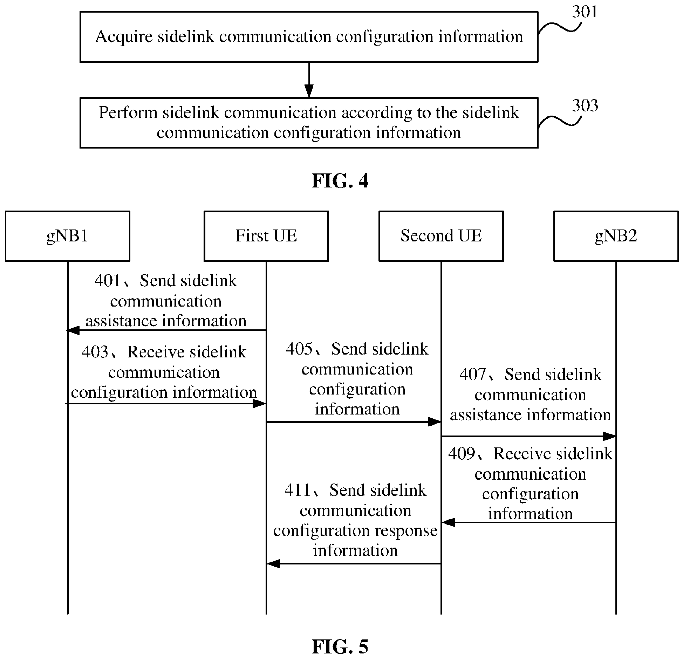

In an embodiment, FIG. 4 is a flowchart of yet another sidelink communication method according to an embodiment of the present application. As shown in FIG. 4, the method provided in this embodiment includes steps 301 to 303.

In step 301, sidelink communication configuration information is acquired.

In step 303, sidelink communication is performed according to the sidelink communication configuration information.

In an embodiment, a first UE acquires sidelink communication configuration information sent by a base station through a broadcast system message or a dedicated signalling, where the sidelink communication configuration information includes one or more of: a channel busy rate (CBR) threshold, a unicast link quantity, a quality of service (QoS) flow quantity, a UE sidelink QoS performance threshold, or a QoS performance threshold of each unicast link.

In an embodiment, the first UE acquires SLRB configuration information from a base station system message or pre-configuration information, where the SLRB configuration information includes one or more of: a bearer configuration index, one or more QFIs associated with a bearer, or one or more QoS configuration profiles associated with a bearer, where the QFI is a QFI of one or more communication cast type bearer relationships.

In an embodiment, the first UE acquires sidelink signalling bearer configuration information from a system message broadcasted by a base station or pre-configuration information, where the sidelink signalling bearer configuration information includes one or more of: a signalling bearer identifier, a logic channel identifier, a logic channel priority, a type of signaling associated with a bearer, or a bearer associated signalling priority.

In an embodiment, the first UE acquires a feedback bearer dedicated bearer configuration parameter from a system message broadcasted by a base station or pre-configuration information, or a feedback bearer dedicated sidelink resource pool.

In an embodiment, the first UE is in the RRC connected state under a first base station (denoted as gNB1/ng-eNB1), the second UE is in the RRC connected state under a second base station (denoted as gNB2/ng-eNB2), and the first UE and the second UE perform sidelink unicast communication and are required to support the RLC AM to satisfy high reliability requirements. This embodiment provides a method for supporting the RLC AM by employing a uni-directional SLRB. The uni-directional SLRB means that the first UE may use bearer 1 to send data to the second UE, but the second UE may not use bearer 1 to send data to the first UE. In order to support the RLC AM, the second UE is required to send an RLC state report to the first UE by employing another bearer 2. Since the first UE and the second UE are under different base stations and are configured with the SLRB by the respective base station, the first UE, the second UE, and the base stations to which the first UE and the second UE belong respectively are required to coordinate another bearer corresponding to a certain SLRB for sending the RLC state report. FIG. 5 is a schematic diagram of interaction in a sidelink communication method according to an embodiment of the present application. As shown in FIG. 5, the method includes steps 401 to 411.

In step 401, sidelink communication assistance information is sent.

In an embodiment, when there is a V2X service to be sent to the second UE at the first UE, the first UE requests a base station to configure an SLRB and allocate sidelink resources for the first UE. In an embodiment, the first UE sends sidelink service related information that is to be sent to the second UE to the first base station, that is, the first UE sends V2X service related information to the first base station, where the V2X service related information includes at least one of: a destination UE2 L2 ID, a PDU session identifier, a QFI, a QFI associated priority, a QFI associated data rate, a QFI associated latency, a QFI associated reliability, or a QFI associated communication range. In addition, since the first UE and the second UE may use different source and destination L2 IDs for performing multiple sidelink unicast link (PC5 interface unicast link) communications or the first UE may use different source L2 IDs to perform multiple unicast link communications with different destination UEs (that is, the second UEs), the V2X service related information reported by the first UE to the base station may be for the source and destination L2 IDs, that is, the V2X service related information is reported per source-destination L2 ID.

The first base station configures an SLRB for the first UE, and the first base station configures an SLRB for the first UE for each destination L2 ID or per source-destination L2 ID. The SLRB configuration information includes at least one of: a destination L2 ID, a source-destination L2 ID, a bearer identifier, an associated PDU session identifier, whether to carry a service discovery application profile (SDAP) header (SDAP header), a default bearer identifier, a mapping relationship between QFIs and SLRBs, a PDCP configuration, an RLC mode indication, a uni-directional unacknowledged mode (uni-UM), a bi-directional UM (bi-UM), a uni-directional AM (uni-AM), a bi-directional AM (bi-AM), an RLC configuration, a logic channel identifier, a logic channel group identifier, or a logic channel configuration. The RLC mode indication includes an unacknowledged mode (UM) and the AM. In this embodiment, the base station configures the RLC mode indication as the AM

In step 403, sidelink communication configuration information is received.

The first UE receives the sidelink communication configuration information configured by the first base station and establishes an SLRB through the sidelink communication configuration information.

In step 405, sidelink communication configuration information is sent.

The first UE sends the sidelink communication configuration information for the second UE to the second UE. The second UE receives the sidelink communication configuration information sent by the first UE. For the SLRB in the RLC AM, the second UE is required to request the gNB2 to establish a feedback bearer used for sending an RLC state report/PDU.

In step 407, sidelink communication assistance information is sent.

The second UE sends the sidelink communication assistance information to the gNB2. The sidelink communication assistance information includes at least one of: an SLRB identifier or a logic channel identifier for sending a corresponding RLC state PDU which is for a certain SLRB, all received SLRB configuration information sent by the first UE, an SLRB identifier or logic channel identifier of the first UE and an RLC AM indication thereof.

In step 409, sidelink communication configuration information is received.

The gNB2 configures SLRB configuration information used for sending an RLC state PDU corresponding to a certain SLRB for the second UE, where the SLRB configuration information includes at least one of: a bearer identifier, an RLC state report bearer indication, or one or more corresponding data bearer identifiers (indicating data bearers whose corresponding RLC state PDUs may be sent by using the current bearer). The one or more corresponding data bearer identifiers include at least one of: an SLRB identifier, a logic channel identifier, an SLRB/logic channel identifier (LCID) for a destination L2 ID (SLRB/LCID within a destination L2 ID, i.e., destination L2 ID and SLRB/LCID), or an SLRB/LCID per source-destination L2 ID (SLRB/LCID within a source-destination L2 ID, i.e., source L2 ID, destination L2 ID and SLRB/LCID).

In step 411, sidelink communication configuration response information is sent.

The second UE sends a PC5 interface SLRB configuration response/completion message to the first UE, where the PC5 interface SLRB configuration response/completion message includes at least one of: a list of SLRBs to be accepted, RLC state report bearer identifiers corresponding to the SLRBs accepted, or a newly-established bearer identifier for sending an RLC state report and one or more corresponding data bearer identifiers thereof (indicating data bearers whose corresponding RLC state PDUs may be sent by using the newly-established bearer).

In an embodiment, when the gNB1 configures SLRB1 for the first UE, if it is decided that SLRB 1 supports the AM, the gNB1 also configures a corresponding feedback SLRB2 (a bearer for sending an RLC state report corresponding to SLRB1) for the first UE (in step 403, the SLRB configuration information includes a bearer identifier or logic channel identifier of the corresponding feedback bearer and a t-stateProhibit timer). The first UE sends the SLRB1 and the feedback SLRB2 to the second UE (the peer UE) (in step 405, the PC5 interface SLRB configuration information includes a bearer identifier or logic channel identifier of the corresponding feedback bearer and a t-stateProhibit timer). The first UE and the second UE establish SLRB1 and the feedback SLRB2.

In an embodiment, the gNB1 only indicates that the SLRB1 supports the AM, and the first UE determines the LCID of the feedback SLRB2. The UE1 sends an SLRB1 configuration and the LCID of the corresponding feedback bearer thereof to the UE2 (in step 405, the PC5 interface SLRB configuration information includes a bearer identifier or LCID of the corresponding feedback bearer). The UE2 reports the LCID of the feedback bearer to the gNB2 and indicates the feedback bearer (in step 407, the SLRB configuration assistance information includes an LCID of the feedback bearer and a feedback bearer indication), and the base station performs the specific configuration of the feedback SLRB (by using the LCID) and sends the configuration to the UE2. The UE2 sends a bearer establishment acknowledgement to the UE1.

In an embodiment, the gNB1 only indicates that the SLRB1 supports the AM, and the UE1 sends an SLRB 1 configuration to the UE2 and indicates that SLRB 1 supports the AM. The UE2 requests the gNB2 to establish a feedback SLRB (i.e., SLRB2) (in step 4, the SLRB configuration assistance information includes a feedback bearer indication), the gNB2 configures the feedback bearer SLRB2 for the UE2, and the UE2 sends an SLRB2 accept parameter to the UE1 and indicates that SLRB2 is the feedback bearer of SLRB1 (in step 411, the PC5 interface bearer configuration response information includes that an indication the feedback bearer corresponding to SLRB1 is SLRB2).

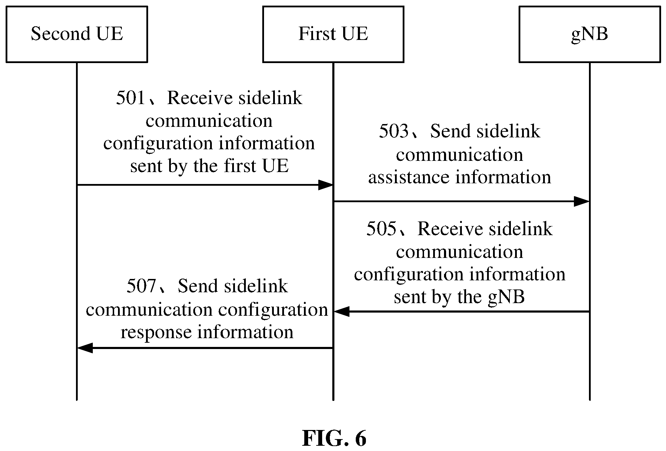

In an embodiment, FIG. 6 is a schematic diagram of interaction in another sidelink communication method according to an embodiment of the present application. As shown in FIG. 6, the method provided in this embodiment includes steps 501 to 507.

In step 501, sidelink communication configuration information sent by a first UE is received.

In step 503, sidelink communication assistance information is sent.

In step 505, sidelink communication configuration information sent by a base station is received.

In step 507, sidelink communication configuration response information is sent.

In an embodiment, the UE1 is in the RRC connected state under a first base station, the UE2 is in the RRC connected state under a second base station, and the UE1 and the UE2 perform sidelink unicast communication and are required to support the RLC AM to satisfy high reliability requirements. In an embodiment, a method for supporting the RLC AM by employing a bi-directional SLRB is provided. The bi-directional SLRB means that both UE1 and UE2 may use the same bearer/logic channel to send data and RLC state reports to each other. Since the UE1 and the UE2 are under different base stations and are configured with an SLRB by the respective base station, the UE1, the UE2, and the base stations to which the UE1 and the UE2 belong respectively are required to coordinate a certain bi-directional SLRB to enable the bearer configuration information of the bi-directional SLRB at the UE1 and the UE2 to keep consistent, so as to avoid conflict between the configuration information of bearers respectively established by the UE1 and the UE2.

The UE1 receives PC5 interface SLRB configuration information sent by the UE2 (the PC5 interface SLRB configuration information of the UE2 comes from the gNB configuration, or is based on the system information block (SIB) SLRB configuration, or is based on the pre-configuration), where the PC5 interface SLRB configuration information includes at least one of: a source L2 ID, a destination L2 ID, a bearer identifier, a uni-directional SLRB indication or a bi-directional SLRB indication, an RLC UM or an RLC AM, a uni-UM, a bi-UM, a uni-AM, a bi-AM, an LCID, or a specific bearer configuration parameter.

The UE1 sends SLRB configuration assistance information to the base station, where the SLRB configuration assistance information includes at least one of: a destination L2 ID, a bearer identifier, a uni-directional SLRB indication or a bi-directional SLRB indication, an RLC UM or an RLC AM, an LCID, a QFI, a QFI associated priority, a QFI associated data rate, a QFI associated latency, a QFI associated reliability, or a QFI associated communication range.

The UE1 receives SLRB configuration (or configuration update) information sent by the base station, where the SLRB configuration (or configuration update) information includes at least one of: a logic channel group (LCG) identifier corresponding to an LCID, a mapping relationship between added/released QFIs and SLRBs, or a t-stateProhibit timer.

In one manner, the UE1 receives a bi-SLRB1 configuration of the UE2, and the UE1 establishes bi-SLRB1 according to the bi-SLRB1 configuration. In this case, even if the UE1 does not send data to the UE2, the UE1 in the connected state is still required to acquire a resource for sending an RLC state and a resource for guaranteeing the bi-SLRB1 QoS from the gNB and send the LCID of the bi-SLRB1 (in step 503, the SLRB configuration assistance information includes a destination UE2 L2 ID, an SLRB ID, and an LCID) to the gNB, and the gNB configures the LCG ID to which the logic channel belongs (in step 505, the SLRB configuration/update information includes a destination UE2 L2 ID, an SLRB ID, an LCID, and a corresponding LCG ID). In a case where there is data QFI1 to be sent to the UE2 at the UE1, if the QFI1 may be mapped to the bi-SLRB1 (the mapping relationship has been configured), the UE1 may employ this bearer (no need to request the gNB to establish a bearer). If the mapping relationship has not been configured, the UE1 sends the QFI1 to the base station to request the establishment of an SLRB, the gNB may reconfigure a bi-SLRB1 (for example, mapping of added/released QFIs to bi-SLRB1), and the UE1 sends the update configuration to the UE2 (or the UE2 updates the mapping of QFIs to bi-SLRB1 through a reflective QoS).

In one manner, in order to avoid the logic channel configuration conflicts, since the UE1 knows the currently used LCID, the UE1 may report a list of an available logic channel identifier to the base station (in step 503, the SLRB configuration assistance information includes at least one of: a destination UE2 L2 ID or a list of an available logic channel identifier), and the base station selects an LCID from the list of the available logic channel identifier reported by the UE1 when configuring an SLRB. Alternatively, the UE1 reports all established LCIDs to the base station, and the base station avoids LCIDs that have been used.

In one manner, the system message broadcast by the base station or pre-configuration information includes one or more sets of SLRB configuration information, and each set of SLRB configuration information includes at least one of: a bearer configuration index, one or more QFIs associated with a bearer, one or more PC5 QoS profiles associated with a bearer, one or more communication cast types associated with a bearer, a PDCP sequence number (SN) size, a PDCP reordering timer, an RLC SN size, an RLC mode indication, an RLC polling configuration parameter, a logic channel priority, a priority guaranteed bit rate, or a bucket size duration, where the communication cast types associated with a bearer include unicast communication, multicast communication, and broadcast communication.

In an embodiment, if one RLC state report bearer (feedback bearer) may be used for sending RLC state PDUs corresponding to multiple data bearers, the RLC state PDU format needs to be enhanced.

One RLC state report bearer may only be used between the source and destination UE node pair, and RLC feedback (RLC state PDU) for multiple destination UEs cannot be placed in one RLC state report bearer.

In an embodiment, the RLC state PDU is required to indicate a data bearer that the acknowledgement/non-acknowledgement (ACK/NACK) targets, that is, the RLC state PDU is required to include an SLRB identifier or an LCID. In one manner, each state PDU includes one RLC control PDU header and one state PDU payload, where the RLC control PDU header includes a data/control field (D/C field), a control PDU type (CPT) field, and an LCID field, where the LCID is used for indicating a data bearer or logic channel identifier corresponding to the state PDU payload.

In an embodiment, Table 1 is an RLC state report format table. As shown in Table 1, the LCID or SLRB ID is 4 bits and the sequence number size (SN size) is 12 bits, but the length of the LCID and the SN size are not limited thereto and are optional/variable according to the protocol final conclusion. One state PDU payload includes all content in Table 1 from the acknowledgement sequence number at the start of Table 1 to the last reserved bit at the end of Table 1. The acknowledgement sequence number (ACK_SN), Extend1 (E1), Extend2 (E2), Extend3 (E3), reserved bit (R), offset start (SOstart), offset end (SOend), and non-acknowledgement range (NACK range) are all the content included in one state PDU payload.

**Table1 RLC state report format table**

| D/C field | CPT field | LCID field | | | |
|---|---|---|---|---|---|
| ACK_SN | | | | | |
| ACK_SN | | E1 | R | R | R |
| NACK_SN | | | | | |
| NACK_SN | | E1 | E2 | E3 | R |
| NACK_SN | | | | | |
| NACK_SN | | E1 | E2 | E3 | R |
| SOsta rt | | | | | |
| SOsta rt | | | | | |
| SOend | | | | | |
| SOend | | | | | |
| NACK_range | | | | | |
| NACK_SN | | | | | |
| NACK_SN | | E1 | E2 | E3 | R |
| ... | | | | | |

In an embodiment, Table 2 is another RLC state report format table. As shown in Table 2, each state PDU includes one RLC control PDU header and one or more state PDU payloads, and the beginning of each state PDU payload includes an LCID indication that is used for indicating a data bearer or logic channel identifier corresponding to an immediately following state PDU payload. The LCID or SLRB ID is 4 bits, but not limited to thereto, and the length of LCID is variable according to the final number of LCIDs determined by the protocol. A corresponding LCID exists before the payload. For example, a corresponding logic channel identifier (LCID1) exists before the payload 1, a corresponding logic channel identifier (LCID2) exists before the payload 2, and so on.

**Table 2 Another RLC state report format table**

| D/C field | CPT field | LCID field 1 |
|---|---|---|
| Payload 1 | | |
| ... | | |
| Payload 1 | | |
| LCID field 2 | | Payload 2 |
| Payload 2 | | |
| ... | | |
| Payload 2 | | |
| ... | | |
| LCID field X | | Payload X |
| ... | | |
| Payload X | | |

In an embodiment, multiple PC5-S L2 links with different source-destination L2 IDs exist between two UEs, and one RLC state report bearer may be used for RLC feedback for data bearers with different source L2 IDs between two identical entity UEs. The RLC state PDU is required to indicate a feedback for which data bearer of which destination L2 ID, that is, the RLC state PDU includes a destination L2 ID of a link and a bearer identifier or an LCID of the corresponding data bearer. In addition, the RLC state PDU may also include a source L2 ID and destination L2 ID of a link and a bearer identifier or an LCID of the corresponding data bearer.In an embodiment, when the coverage or RRC state of a UE changes, the previous SLRB configuration may still be used to some extent to maintain service continuity.

For example, when a UE enters the RRC idle/inactive state from the RRC connected state or becomes an out-of-coverage UE, the UE still uses the SLRBs established when the UE is in the connected state to continue sending or receiving the current cached data, and the UE uses a sidelink resource pool in the V2X system message broadcast by the base station or uses a preconfigured sidelink resource pool to send data while ignoring the LCG ID configuration. If the current sidelink resources are congested, the UE releases some SLRBs, or a new SLRB is established according to the SLRB configuration in the V2X system message broadcast by the base station or the pre-configuration information.

For example, when the UE enters the RRC connected state from the RRC idle/inactive state or the out-of-coverage state, the UE reports all currently established SLRBs to the base station, including all SLRBs between each destination L2 ID as well as QFIS/PQIs/priority/reliability/latency/range associated with each SLRB, and the gNB may perform partial reconfiguration/configuration update, such as configuring an LCG ID corresponding to an SLRB ID/LCID or updating the mapping relationship between QFIs and SLRBs. After the UE receives the SLRB configuration update information sent by the gNB, the UE sends the SLRB configuration update information to the peer UE over the PC5 interface. The peer UE acknowledges whether to accept the SLRB configuration update information, and if the peer UE accepts the SLRB configuration update information, updates the corresponding SLRB configuration according to the SLRB configuration update information and sends the SLRB configuration update acknowledgement information to the UE (the SLRB configuration update acknowledgement information includes at least one of: a list of identifiers of SLRB bearers to be accepted, a list of identifiers of SLRB bearers rejected, or a rejection cause). After the UE receives the SLRB configuration update acknowledgement information from the peer UE, the UE sends an RRC reconfiguration completion message to the base station, where the RRC reconfiguration completion message includes at least one of: a list of identifiers of SLRB bearers to be accepted, a list of identifiers of SLRB bearers rejected , or a rejection cause.

The V2X service related information, SLRB configuration assistance information and SLRB request information sent by the UE to the base station may be sent through sidelink UE information or UE assistance information or a newly defined RRC message. The SLRB configuration information sent by the base station to the UE may be sent through the RRC reconfiguration message.

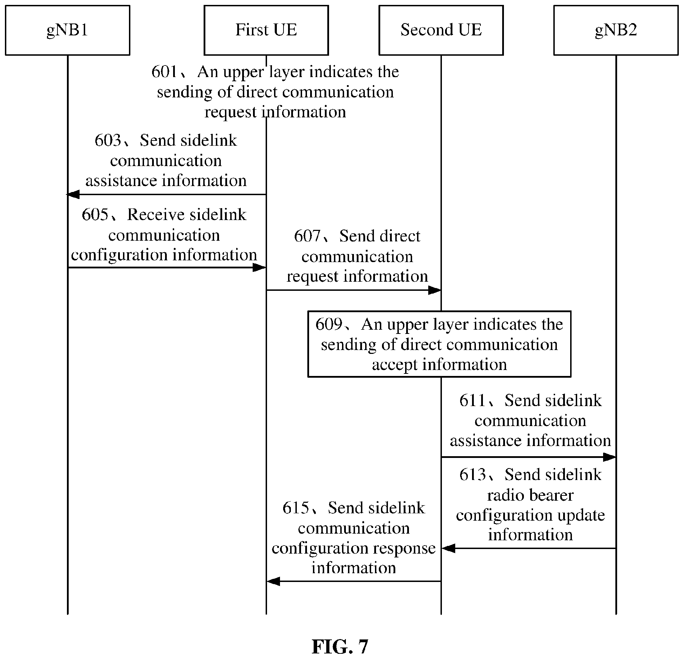

In an embodiment, FIG. 7 is a schematic diagram of interaction in yet another sidelink communication method according to an embodiment of the present application. As shown in FIG. 7, the method includes steps 601 to 615.

In step 601, an upper layer indicates the sending of direct communication request information.

In step 603, sidelink communication assistance information is sent.

In step 605, sidelink communication configuration information is received.

In step 607, the direct communication request information is sent.

In step 609, an upper layer indicates the sending of direct communication accept information.

In step 611, sidelink communication assistance information is sent.

In step 613, SLRB configuration update information is sent.

In step 615, sidelink communication configuration response information is sent.

For PC5/sidelink unicast communication, it is defined that PC5 RRC signallings are at least used for UE capability interaction and AS layer configuration information interaction, and these PC5 RRC signallings should be transmitted through a sidelink signalling bearer over the PC5 interface. In addition, PC5-S signallings (such as direct communication request/response/accept, link identifier update request/response, and disconnect request/response) may also be transmitted through the sidelink signalling bearer. As shown in FIG. 7, the UE1 and the UE2 in the RRC connected state send the direct communication request/response message, and the processing of sending other PC5-S signallings or PC5-RRC signallings is similar to the sending of the direct communication request/response message.

When the upper layer of the UE1 indicates the sending of a direct communication request message (or the sending of a PC5-S signalling message), if the UE1 is in the RRC connected state, the UE1 requests an SLRB configuration and sidelink resources from the base station and sends SLRB configuration request information to the base station, where the SLRB configuration request information includes at least one of: a signalling bearer, a data bearer, a signalling bearer priority, a signalling bearer identifier, a PC5-S signalling transmission indication, a PC5-RRC signalling transmission indication, a bearer associated destination L2 ID, or a bearer associated source-destination L2 ID.

After the base station receives the SLRB configuration request information from the UE1, the base station performs corresponding SLRB configuration, where the SLRB configuration information includes at least one of: a bearer associated destination L2 ID, a bearer associated source-destination L2 ID, a bearer identifier, a logic channel identifier, a logic channel priority, a type of signaling associated with a bearer (PC5-S signalling and/or PC5-RRC signalling), a bearer associated signalling priority, an RLC mode indication (TM or AM), a PDCP sequence number size, an RLC sequence number size, an RLC AM polling parameter, an RLC reassembly timer, a priority guaranteed bit rate, a bucket size duration, or a logic channel group identifier. The SLRB configuration information includes configuration of one or more bearers, and the configuration of each bearer includes the above-mentioned information.

After the UE1 receives the SLRB configuration configured by the base station, the UE1 establishes a corresponding SLRB that is used for sending a direct communication request message. After the UE2 receives the direct communication request, if the upper layer of the UE2 decides to reply to the direct communication accept message and instructs the UE2 to send the direct communication accept message, in a case where the UE2 is in the RRC connected state, the UE2 requests the base station to establish an SLRB configuration and sidelink resources by following the specific steps that are the same as the process of th UE1 requesting the SLRB configuration from the base station, which will not be repeated here. After the UE2 receives the SLRB configuration sent by the base station, the UE2 establishes a corresponding SLRB that is used for sending a direct communication response/accept message to the UE1.

In an embodiment, if the UE1 is in the RRC idle/inactive state, the V2X system message broadcast by the base station is configured with one or more sidelink signalling bearer configurations, and each sidelink signalling bearer configuration includes at least one of: a bearer identifier, a logic channel identifier, a logic channel priority, a type of signaling associated with a bearer (PC5-S signalling and/or PC5-RRC signalling), a bearer associated signalling priority, an RLC mode indication (TM or AM), a PDCP sequence number size, an RLC sequence number size, an RLC AM polling parameter, an RLC reassembly timer, or a logic channel group identifier. The UE1 in the RRC idle/inactive state selects a sidelink signalling bearer configuration from the V2X system message according to the priority of a to-be-transmitted signalling and establishes a corresponding sidelink signalling bearer for sending the to-be-transmitted signalling.

For the UE in the out-of-coverage state, the pre-configuration information includes one or more sidelink signalling bearer configurations, and according to the pre-configuration information, the UE establishes a sidelink signalling bearer for sending a to-be-transmitted signalling.

In one manner, the UE (regardless of the coverage/RRC state of the UE) sends a PC5-S message or a PC5-RRC signalling message by using a protocol default PC5 SRB0 and/or PC5 SRB1, where the protocol default PC5 SRB0/1 includes at least one of: a bearer identifier, a logic channel identifier, a logic channel priority, a type of signaling associated with a bearer (PC5-S signalling and/or PC5-RRC signalling), a bearer associated signalling priority, an RLC mode indication (TM or AM), a PDCP sequence number size, an RLC sequence number size, an RLC AM polling parameter, an RLC reassembly timer, or a logic channel group identifier.

In one manner, a PC5-S signalling is sent over a data bearer of a sidelink service channel by assiging a specific/reserved logic channel identifier. Since the data bearer used for sending the PC5-S signalling is different from the data bearer used for sending a V2X data packet, the configuration parameter of a protocol default data bearer for sending the PC5-S signalling may be defined, or the UE may indicate PC5-S signalling transmission to the base station and the base station configures a data bearer and indicates that the bearer is used for sending the PC5-S signalling.

In one manner, PC5 SRB1 is established between UEs through an initial PC5-RRC signalling and/or PC5 SRB2 is configured through an AS configuration messages. For example, the UE1 sends PC5 SRB1 configuration information or SRB2 configuration information to the UE2, where the PC5 SRB1 configuration information or SRB2 configuration information includes at least one of: a bearer identifier, a logic channel identifier, a logic channel priority, a type of signaling associated with a bearer (PC5-S signalling and/or PC5-RRC signalling), a bearer associated signalling priority, an RLC mode indication (TM or AM), a PDCP sequence number size, an RLC sequence number size, an RLC AM polling parameter, or an RLC reassembly timer. After the UE2 receives the PC5 SRB1 configuration information or SRB2 configuration information, if the UE2 is in the RRC connected state, the UE2 sends SLRB assistance configuration information to the base station, where the SLRB assistance configuration information includes at least one of: a bearer associated destination L2 ID, a bearer associated source-destination L2 ID, a destination AS layer UE ID, a bearer identifier, a logic channel identifier, a logic channel priority, a type of signaling associated with a bearer (PC5-S signalling and/or PC5-RRC signalling), a bearer associated signalling priority, an RLC mode indication (TM or AM), a PDCP sequence number size, an RLC sequence number size, an RLC AM polling parameter, or an RLC reassembly timer. After the base station receives the SLRB assistance configuration information, the base station sends SLRB configuration acknowledgement information to the UE2 and configures sidelink resources for the UE2.

In an embodiment, multiple PC5 unicast links (PC5-S link, PC5 L2 unicast link) may be established between two UEs at the upper layer/V2X layer, and for each PC5-S link, the UE uses a different L2 ID. This embodiment provides the transmission of data at the AS layer in this case. For example, two PC5-S links exist between the UE1 and the UE2, which correspond to different service types/PC5 QoSs; for the two PC5-S links, the UE1/UE2 use different L2 IDs, respectively, that is, for PC5-S link1, the UE1 uses L2 ID11 and the UE2 uses L2 ID21, and for PC5-S link2, the UE1 uses L2 ID12 and the UE2 uses L2 ID22.

Although multiple PC5-S links may exist between two UEs at the upper layer, only one PC5-RRC connection may be supported at the AS layer, which can reduce/avoid repeated PC5-RRC connection or UE capability interactions at the AS layer. An AS layer UE ID is defined, which is allocated by the UE itself and is the unique identifier of the UE in the AS layer.

In an embodiment, the AS layer UE IDs are exchanged between UEs through the PC5-S signalling (such as the direct communication request/response message), and the transmission at the MAC layer is performed still through the source L2 ID and the destination L2 ID provided by the upper layer. For example, the UE1 provides an AS layer UE ID allocated by itself to the upper layer/V2X layer, and after the V2X layer receives the AS layer UE ID, the V2X layer includes the AS layer UE1 ID in a direct communication request message and sends the direct communication request message. After the UE2 receives the direct communication request message at the V2X layer, the UE2 parses the AS layer UE1 ID of the UE1 from the direct communication request message and provides the AS layer UE1 ID to the AS layer of the UE2. The UE2 includes an AS layer UE2 ID allocated by itself in a direct communication response message and sends the direct communication response message to the UE1. Subsequently, when the UE1 initiates the establishment of PC5-S link2, the UE1 includes its own AS layer UE ID in a PC5-S link2 request message, and when the UE2 recognizes PC5-RRC connection/UE context that has been established with the UE1 and PC5-S link2 service transmission is supported according to the saved UE1 context, then the UE2 directly sends a response message including the UE2 AS layer ID.

In an manner, the AS layer UE IDs are exchanged between UEs through the PC5-S signalling, and the transmission at the MAC layer is performed still through the source L2 ID and the destination L2 ID provided by the upper layer. For example, after the UE2 receives the direct communication request sent by the UE1, the UE2 initiates the UE context setup process to the UE1 and includes the AS layer UE ID of the UE2 in a UE context setup request/PC5-RRC connection request message, and the UE1 carries the AS layer UE ID of the UE1 in a response message such as a UE context setup response/PC5-RRC connection response message. The AS layer UE IDs may also be exchanged through other PC5-RRC signallings.

In one manner, the transmission at MAC layer of the UE is performed still through the source and destination AS layer UE IDs, that is, the source and destination information fields in the MAC subheader include the AS layer UE IDs of the source UE and the destination UE. In this case, from the perspective of the upper layer/V2X layer, although source and destination L2 IDs are different, the data of the same source and destination UEs may be transmitted in one MAC PDU, which can improve the resource utilization. For the direct communication request message, the UE1 uses the AS layer UE1 ID and the initial destination L2 ID provided by the upper layer to send the direct communication request message. After the UE2 receives the direct communication request message, the UE2 uses the AS layer UE1 ID of the UE2 and the AS layer UE1 ID of the destination UE1 to send a PC5-S or PC5-RRC signalling, and subsequent signallings and data are transmitted between UE1 and UE2 by using the AS layer UE IDs.

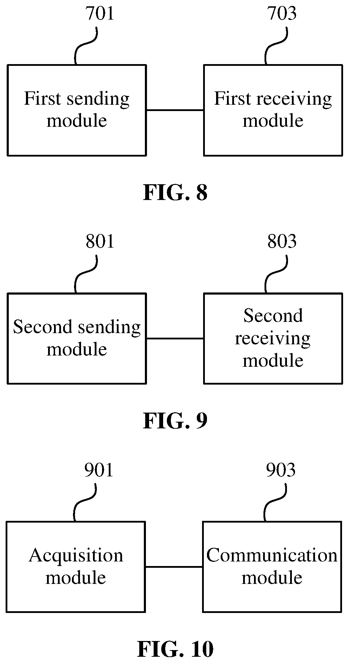

FIG. 8 is a structural block diagram of a sidelink communication apparatus according to an embodiment of the present application. As shown in FIG. 8, the sidelink communication apparatus provided in this embodiment includes a first sending module 701 and a first receiving module 703.

The first sending module 701 is configured to send sidelink communication assistance information to a base station.

The first receiving module 703is configured to receive sidelink communication configuration information sent by the base station.

The sidelink communication apparatus provided in this embodiment is configured to implement the sidelink communication method of the embodiment shown in FIG. 2 and has a similar implementation principle and technical effect, which will not be described in detail herein.

In an embodiment, the sidelink communication assistance information includes sidelink service related information.

The sidelink service related information includes one or more of: a PDU session ID, a QFI, a QFI associated priority, a QFI associated data rate, a QFI associated latency, a QFI associated reliability, or a QFI associated communication range.

In an embodiment, the sidelink service related information further includes: one or more sets of sidelink service related information associated with a first identifier and a second identifier or one or more sets of sidelink service related information associated with the second identifier.

In an embodiment, the sidelink communication assistance information further includes one or more of: a data bearer type indication, a signalling bearer type indication, a signalling bearer priority, a signalling bearer identifier, or a signalling transmission indication.

In an embodiment, the sidelink communication configuration information includes SLRB configuration information, where the SLRB configuration information includes signalling bearer configuration information and/or data bearer configuration information.

In an embodiment, the SLRB configuration information includes: configuration information of one or more SLRBs associated with a first identifier and a second identifier, or configuration information of one or more SLRBs associated with the second identifier.

In an embodiment, the SLRB configuration information includes data bearer configuration information.

The data bearer configuration information includes one or more of: a uni-directional SLRB indication or a bi-directional SLRB indication, or an RLC mode indication.

In an embodiment, the SLRB configuration information includes signalling bearer configuration information.

The signalling bearer configuration information includes one or more of: a uni-directional SLRB indication or a bi-directional SLRB indication, a bearer identifier, an LCID, a logic channel priority, a type of signaling associated with a bearer, or a bearer associated signalling priority.

In an embodiment, in a case where an SLRB is in an RLC AM and is a uni-directional SLRB, the data bearer configuration information further includes an LCID of a feedback bearer, where the feedback bearer is a bearer used for sending an RLC state report corresponding to a data packet on the SLRB.

In an embodiment, in a case where an SLRB is in an RLC AM and is a uni-directional SLRB, the SLRB configuration information further includes an LCID of a feedback bearer, where the feedback bearer is a bearer used for sending an RLC state report corresponding to a data packet on the SLRB.

In an embodiment, the sidelink communication apparatus further includes a third sending module and a third receiving module.

The third receiving module is configured to, after receiving the sidelink communication configuration information sent by the base station, send the SLRB configuration information to a second UE.

The third receiving module is configured to receive SLRB configuration response information sent by the second UE.

In an embodiment, in a case where an SLRB is in an RLC AM and is a uni-directional SLRB, the SLRB configuration information further includes an LCID of a feedback bearer, where the feedback bearer is a bearer used for sending an RLC state report corresponding to a data packet on the SLRB.

In an embodiment, the SLRB configuration response information includes one or more of: a list of identifiers of bearers to be accepted, a list of identifiers of bearers rejected, or a rejection cause.

In an embodiment, in a case where an SLRB is in an RLC AM and is a uni-directional SLRB, the SLRB configuration response information further includes a logic channel identifier of a feedback bearer, where the feedback bearer is a bearer used for sending an RLC state report corresponding to a data packet on the SLRB.

In an embodiment, the sidelink communication apparatus further includes a fourth sending module.

The fourth sending module is configured to, after receiving the SLRB configuration response information sent by the second UE, send an RRC reconfiguration completion message to the base station, where the RRC reconfiguration completion message includes one or more of: a list of identifiers of bearers to be accepted, a list of identifiers of bearers rejected, or a rejection cause.

In an embodiment, in a case where a first UE enters an RRC connected state from an RRC idle state, an RRC inactive state or an out-of-coverage state, the sidelink communication assistance information further includes information of an SLRB which has been established when the first UE is in the RRC idle state, the RRC inactive state or the out-of-coverage state, where the information of the SLRB includes one or more of: an LCID of the SLRB, a bearer identifier, a second identifier associated with a bearer, a first identifier and a second identifier associated with a bearer, or a mapping relationship between a bearer and a QFI.

In an embodiment, the sidelink communication configuration information includes an LCG ID to which a logical channel of the SLRB belongs.

In an embodiment, the sidelink communication configuration information further includes SLRB configuration update information, where the SLRB configuration update information is information obtained after updating any configuration information of an established SLRB.

In an embodiment, the first identifier is a source L2 ID or a source AS layer UE ID, and the second identifier is a destination L2 ID or a destination AS layer UE ID.

FIG. 9 is a structural block diagram of another sidelink communication apparatus according to an embodiment of the present application. As shown in FIG. 9, the sidelink communication apparatus provided in this embodiment includes a second receiving sending module 801 and a second sending module 803.

The second receiving module 801 is configured to receive sidelink communication configuration information sent by a first UE.

The second sending module 803 is configured to send sidelink communication configuration response information to the first UE.

The sidelink communication apparatus provided in this embodiment is configured to implement the sidelink communication method of the embodiment shown in FIG. 3 and has a similar implementation principle and technical effect, which will not be described in detail herein.

In an embodiment, the sidelink communication configuration information includes SLRB configuration information, where the SLRB configuration information includes signalling bearer configuration information and/or data bearer configuration information.

In an embodiment, the SLRB configuration information includes: configuration information of one or more SLRBs associated with a first identifier and a second identifier, or configuration information of one or more SLRBs associated with the second identifier.

In an embodiment, the signalling bearer configuration information includes one or more of: a uni-directional SLRB indication or a bi-directional SLRB indication, a bearer identifier, an LCID, a logic channel priority, a type of signaling associated with a bearer, or a bearer associated signalling priority.

In an embodiment, the data bearer configuration information includes one or more of: a uni-directional SLRB indication or a bi-directional SLRB indication, or an RLC mode indication.

In an embodiment, in a case where a signalling bearer or a data bearer is in an RLC AM and is a uni-directional SLRB, the SLRB configuration information further includes an LCID of a feedback bearer, where the feedback bearer is a bearer used for sending an RLC state report corresponding to a data packet on the signalling bearer or the data bearer.

In an embodiment, the sidelink communication configuration response information includes SLRB configuration response information, where the SLRB configuration response information includes one or more of: a list of identifiers of bearers to be accepted, a list of identifiers of bearers rejected, or a rejection cause.

In an embodiment, in a case where a signalling bearer or a data bearer is in an RLC AM and is a uni-directional SLRB, the SLRB configuration response information further includes an LCID of a feedback bearer, where the feedback bearer is a bearer used for sending an RLC state report corresponding to a data packet on the signalling bearer or the data bearer.

In an embodiment, the sidelink communication apparatus further includes a fourth receiving module and a fifth sending module.

The fourth receiving module is configured to, after sending the sidelink communication configuration response information to the first UE, receive data sent by the first UE through a bearer.

The fifth sending module is configured to, in a case where a bearer is in an RLC AM and is a uni-directional SLRB, send, by a second UE, an RLC state report through a feedback bearer.

In an embodiment, the RLC state report includes one or more of: an LCID of a data bearer corresponding to the RLC state report, a second identifier associated with the data bearer corresponding to the RLC state report, or a first identifier associated with the data bearer corresponding to the RLC state report and the second identifier associated with the data bearer corresponding to the RLC state report.

In an embodiment, the sidelink communication apparatus further includes a sixth sending module and a fifth receiving module.

The sixth sending module is configured to, after receiving the sidelink communication configuration information sent by the first UE, send sidelink communication assistance information to a base station.

The first receiving module 703is configured to receive sidelink communication configuration information sent by the base station.

In an embodiment, the sidelink communication assistance information includes one or more of: a list of an idle logic channel identifier, a bearer type indication, or a signalling transmission indication.

In an embodiment, the sidelink communication configuration information includes one or more of: a bearer identifier, an LCID, a logic channel priority, a type of signaling associated with a bearer, a bearer associated signalling priority, or a uni-directional SLRB indication or a bi-directional SLRB indication.

In an embodiment, the sidelink communication apparatus further includes a sixth receiving module, which is configured to receive an AS layer UE ID of the first UE sent by the first UE through a direct communication request message or a sidelink RRC signalling message.

In an embodiment, the sidelink communication apparatus further includes a seventh sending module, which is configured to send an a AS layer UE ID of the second UE through a direct communication accept message or a sidelink RRC signalling message

In an embodiment, the sidelink communication apparatus further includes a seventh receiving module, which is configured to, after sending sidelink communication configuration response information to the first UE, receive an MAC PDU sent by the first UE, where an MAC subheader of the MAC PDU includes the AS layer UE ID of the first UE and the AS layer UE ID of the second UE.

FIG. 10 is a structural block diagram of yet another sidelink communication apparatus according to an embodiment of the present application. As shown in FIG. 10, the sidelink communication apparatus provided in this embodiment includes an acquisition module 901 and a communication module 903.

The acquisition module 901 is configured to acquire sidelink communication configuration information.

The communication module 903 is configured to perform sidelink communication according to the sidelink communication configuration information.

The sidelink communication apparatus provided in this embodiment is configured to implement the sidelink communication method of the embodiment shown in FIG. 4 and has a similar implementation principle and technical effect, which will not be described in detail herein.

In an embodiment, a first UE acquires sidelink communication configuration information sent by a base station through a broadcast system message or a dedicated signalling, where the sidelink communication configuration information includes one or more of: a CBR threshold, a unicast link quantity, a QoS flow quantity, a UE sidelink QoS performance threshold, or a QoS performance threshold of each unicast link.

In an embodiment, the first UE acquires SLRB configuration information from a system message of a base station or pre-configuration information, where the SLRB configuration information includes one or more of: a bearer configuration index, one or more QFIs associated with a bearer, or one or more QoS configuration profiles associated with a bearer, where the QFI is a QFI of one or more communication cast type bearer relationships.

In an embodiment, the first UE acquires sidelink signalling bearer configuration information from a system message broadcast by a base station or pre-configuration information, where the sidelink signalling bearer configuration information includes one or more of: a signalling bearer identifier, an LCID, a logic channel priority, a type of signaling associated with a bearer, or a bearer associated signalling priority.

In an embodiment, the first UE acquires a feedback bearer dedicated bearer configuration parameter from a system message broadcast by a base station or pre-configuration information, or a feedback bearer dedicated sidelink resource pool.

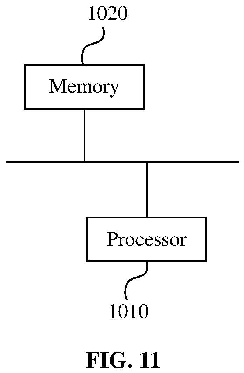

FIG. 11 is a structural diagram of a device according to an embodiment of the present application. As shown in FIG. 11, the device provided in the present application includes a processor 1010 and a memory 1020. The number of processors 310 in the device may be one or more, with one processor 1010 as an example in FIG. 11. The number of memories 1020 in the device may be one or more, with one memory 1020 as an example in FIG. 11. The processor 1010 and the memory 1020 of the device may be connected by a bus or in other manners, and FIG. 11 is illustrated by using an example of the connection by the bus. In an embodiment, the device is a first UE.

The memory 1020, as a computer-readable storage medium, may be configured to store software programs and computer executable programs and modules such as program instructions/modules corresponding to the equipment in any embodiment of the present application (such as the first sending module and the first receiving module in the sidelink communication apparatus). The memory 1020 may include a program storage region and a data storage region, where the program storage region may store an operating system and an application program required by at least one function while the data storage region may store data created depending on use of a device. In addition, the memory 1020 may include a high-speed random access memory, and may also include a non-volatile memory such as at least one disk memory, flash memory or other non-volatile solid state memories. In some examples, the memory 1020 may include memories which are remotely disposed relative to the processor 1010 and these remote memories may be connected to the device via a network. The examples of the preceding network include, but are not limited to, the Internet, an intranet, a local area network, a mobile communication network, and a combination thereof.

The device provided above may be configured to execute the sidelink communication method applied to the first UE provided in any one of the embodiments described above, and has corresponding functions and beneficial effects.

When the device is a second UE, the program stored in the memory 1020 may be a program instruction/module that corresponds to the sidelink communication method applied to the second UE provided in the embodiments of the present application. The processor 1010 executes the software programs, instructions, and modules stored in the memory 1020 so as to perform one or more function applications and data processing of the computer device, that is, to implement the sidelink communication method applied to the second UE described in the preceding method embodiments. It is to be understood that when the device is a second UE, the device can execute the sidelink communication method applied to the second UE in any one of the embodiments of the present application, and has corresponding functions and effects.

The embodiments of the present application further provide a storage medium including computer-executable instructions which, when executed by a computer processor, implement a sidelink communication method. The method is applied to a first UE and includes the following steps: sidelink communication assistance information is sent to a base station, and sidelink communication configuration information sent by the base station is received.

The embodiments of the present application further provide a storage medium including computer-executable instructions which, when executed by a computer processor, implement a sidelink communication method. The method is applied to a second UE side and includes the following steps: sidelink communication configuration information sent by a first UE is received, and sidelink communication configuration response information is sent to the first UE.

It is to be understood by those skilled in the art that the term user equipment encompasses any suitable type of wireless user equipment, such as mobile phones, portable data processing devices, portable web browsers, or vehicle-mounted mobile stations.

In general, various embodiments of the present application may be implemented in hardware, a dedicated circuit, software, logic, or any combination thereof. For example, some aspects may be implemented in hardware while other aspects may be implemented in firmware or software that may be executed by a controller, a microprocessor, or other computing apparatuses, which is not limited thereto.

The embodiments of the present application may be implemented by a data processor of a mobile apparatus executing computer program instructions, such as in a processor entity, or by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

The block diagram of any logic flow in drawings of the present application may represent program steps, or may represent interconnected logic circuits, modules, and functions, or may represent a combination of program steps, logic circuits, modules, and functions. The computer programs may be stored in a memory. The memory may be of any type suitable to the local technical environment and may be implemented using any suitable data storage technology such as, but not limited to, a read-only memory (ROM), a random access memory (RAM), an optical memory device and system (digital video disc (DVD) or compact disc (CD)), and the like. The computer-readable storage medium may include a non-transitory storage medium. The data processor may be of any type suitable to the local technical environment which, such as but not limited to, a general purpose computer, a special purpose computer, a microprocessor, a digital signal processing (DSP), an application specific integrated circuit (ASIC), a field-programmable gate array (FGPA), and a processor based on a multi-core processor architecture.

## Claims

1. A sidelink communication method, comprising:
sending sidelink communication assistance information to a base station; and
receiving sidelink communication configuration information sent by the base station.

2. The method of claim 1, wherein the sidelink communication assistance information comprises sidelink service related information:
wherein the sidelink service related information comprises at least one of: a protocol data unit session identifier, a quality of service flow identifier, QFI, a QFI associated priority, a QFI associated data rate, a QFI associated latency, a QFI associated reliability, or a QFI associated communication range.

3. The method of claim 2, wherein the sidelink service related information further comprises:
at least one set of sidelink service related information associated with a first identifier and a second identifier; or
at least one set of sidelink service related information associated with the second identifier.

4. The method of claim 1, wherein the sidelink communication assistance information further comprises at least one of: a data bearer type indication, a signalling bearer type indication, a signalling bearer priority, a signalling bearer identifier, or a signalling transmission indication.

5. The method of claim 1, wherein the sidelink communication configuration information comprises sidelink radio bearer, SLRB, configuration information;
wherein the SLRB configuration information comprises at least one of: signalling bearer configuration information or data bearer configuration information.

6. The method of claim 5, wherein the SLRB configuration information comprises:
configuration information of at least one SLRB associated with a first identifier and a second identifier; or
configuration information of at least one SLRB associated with the second identifier.

7. The method of claim 5 or 6, wherein the SLRB configuration information comprises data bearer configuration information;
wherein the data bearer configuration information comprises at least one of: a uni-directional SLRB indication or a bi-directional SLRB indication, or a radio link control, RLC, mode indication.

8. The method of claim 5 or 6, wherein the SLRB configuration information further comprises signalling bearer configuration information;
wherein the signalling bearer configuration information comprises at least one of: a uni-directional SLRB indication or a bi-directional SLRB indication, a bearer identifier, a logic channel identifier, a logic channel priority, a type of signaling associated with a bearer, or a bearer associated signalling priority.

9. The method of claim 6, wherein in a case where an SLRB is in an RLC acknowledged mode, AM, and is a uni-directional SLRB, the SLRB configuration information further comprises a logic channel identifier of a feedback bearer, wherein the feedback bearer is a bearer used for sending an RLC state report corresponding to data packets on the SLRB.

10. The method of claim 5, after receiving the sidelink communication configuration information sent by the base station, further comprising:
sending the SLRB configuration information to a second user equipment, UE; and
receiving SLRB configuration response information sent by the second UE.

11. The method of claim 10, wherein in a case where an SLRB is in an RLC AM and is a uni-directional SLRB, the SLRB configuration information further comprises a logic channel identifier of a feedback bearer, wherein the feedback bearer is a bearer used for sending an RLC state report corresponding to a data packet on the SLRB.

12. The method of claim 10, wherein the SLRB configuration response information comprises at least one of: a list of identifiers of bearers to be accepted, a list of identifiers of bearers rejected, or a rejection cause.

13. The method of claim 10, wherein in a case where an SLRB is in an RLC AM and is a uni-directional SLRB, the SLRB configuration response information comprises a logic channel identifier of a feedback bearer, wherein the feedback bearer is a bearer used for sending an RLC state report corresponding to a data packet on the SLRB.

14. The method of claim 10, after receiving the SLRB configuration response information sent by the second UE, further comprising:
sending a radio resource control, RRC, reconfiguration completion message to the base station,
wherein the RRC reconfiguration completion message comprises at least one of: a list of identifiers of bearers to be accepted, a list of identifiers of bearers rejected, or a rejection cause.

15. The method of claim 1, wherein in a case where a first UE enters an RRC connected state from an RRC idle state, an RRC inactive state or an out-of-coverage state, the sidelink communication assistance information comprises information of an SLRB which has been established when the first UE in the RRC idle state, the RRC inactive state or the out-of-coverage state, wherein the information of the SLRB comprises at least one of: a logic channel identifier of the SLRB, a bearer identifier, a second identifier associated with a bearer, a first identifier and a second identifier associated with a bearer, a mapping relationship between a bearer and a QFI, a uni-directional SLRB indication or a bi-directional SLRB indication, an RLC mode indication, or a bearer configuration.

16. The method of claim 15, wherein the sidelink communication configuration information comprises a logic channel group identifier to which a logic channel of the SLRB belongs.

17. The method of claim 1, wherein the sidelink communication configuration information further comprises SLRB configuration update information, wherein the SLRB configuration update information is information obtained after updating any configuration information of an established SLRB.

18. The method of claim 3, wherein the first identifier is a source layer 2 identifier or a source access stratum layer UE identifier, and the second identifier is a destination layer 2 identifier or a destination access stratum layer UE identifier.

19. A sidelink communication method, comprising:
receiving sidelink communication configuration information sent by a first user equipment, UE; and
sending sidelink communication configuration response information to the first UE.

20. The method of claim 19, wherein the sidelink communication configuration information comprises sidelink radio bearer, SLRB, configuration information;
wherein the SLRB configuration information comprises at least one of: signalling bearer configuration information or data bearer configuration information.

21. The method of claim 20, wherein the SLRB configuration information comprises:
configuration information of at least one SLRB associated with a first identifier and a second identifier; or
configuration information of at least one SLRB associated with the second identifier.

22. The method of claim 20 or 21, wherein the signalling bearer configuration information comprises at least one of: a uni-directional SLRB indication or a bi-directional SLRB indication, a bearer identifier, a logic channel identifier, a logic channel priority, a type of signaling associated with a bearer, or a bearer associated signalling priority.

23. The method of claim 20 or 21, wherein the data bearer configuration information comprises at least one of: a uni-directional SLRB indication or a bi-directional SLRB indication, or a radio link control, RLC, mode indication.

24. The method of claim 20 or 21, wherein in a case where a signalling bearer or a data bearer is in an RLC acknowledged mode, AM, and is a uni-directional SLRB, the SLRB configuration information further comprises a logic channel identifier of a feedback bearer, wherein the feedback bearer is a bearer used for sending an RLC state report corresponding to a data packet on the signalling bearer or the data bearer.

25. The method of claim 20 or 21, wherein the sidelink communication configuration response information comprises SLRB configuration response information, wherein the SLRB configuration response information comprises at least one of: a list of identifiers of bearers to be accepted, a list of identifiers of bearers rejected, or a rejection cause.

26. The method of claim 20 or 21, wherein in a case where a signalling bearer or a data bearer is in an RLC AM and is a uni-directional SLRB, the SLRB configuration response information in the sidelink communication configuration response information further comprises a logic channel identifier of a feedback bearer, wherein the feedback bearer is a bearer used for sending an RLC state report corresponding to a data packet on the signalling bearer or the data bearer.

27. The method of claim 19, after sending the sidelink communication configuration response information to the first UE, further comprising:
receiving a data packet sent by the first UE through a bearer established according to the sidelink communication configuration information; and
in a case where the bearer is in an RLC AM and is a uni-directional SLRB, sending, by a second UE, an RLC state report through a feedback bearer.

28. The method of claim 27, wherein the RLC state report comprises at least one of:
a logic channel identifier of a bearer where a data packet corresponding to the RLC state report is located,
a second identifier associated with the bearer where the data packet corresponding to the RLC state report is located, or
a first identifier and a second identifier that are both associated with the bearer where the data packet corresponding to the RLC state report is located.

29. The method of claim 19, after receiving the sidelink communication configuration information sent by the first UE, further comprising:
sending sidelink communication assistance information to a base station; and
receiving sidelink communication configuration information sent by the base station.

30. The method of claim 29, wherein the sidelink communication assistance information comprises at least one of: a list of an idle logic channel identifier, received SLRB configuration information sent by the first UE, a uni-directional SLRB indication or a bi-directional SLRB indication, a signalling bearer indication, a data bearer indication, or a signalling transmission indication.

31. The method of claim 29, wherein the sidelink communication configuration information comprises at least one of: a bearer identifier, a logic channel identifier, a logic channel priority, a type of signaling associated with a bearer, a bearer associated signalling priority, or a uni-directional SLRB indication or a bi-directional SLRB indication.

32. The method of claim 19, further comprising:
receiving an access stratum layer UE identifier of the first UE sent by the first UE through a direct communication request message or a sidelink radio resource control, RRC, signalling message.

33. The method of claim 19, further comprising:
sending, through a direct communication accept message or a sidelink RRC signalling message, an access stratum layer UE identifier of the second UE to the first UE.

34. The method of claim 19, after sending the sidelink communication configuration response information to the first UE, further comprising:
receiving a media access control, MAC, protocol data unit sent by the first UE, wherein an MAC subheader of the MAC protocol data unit comprises the access stratum layer UE identifier of the first UE and the access stratum layer UE identifier of the second UE.

35. A sidelink communication method, comprising:
acquiring sidelink communication configuration information; and
performing sidelink communication according to the sidelink communication configuration information.

36. The method of claim 35, comprising: acquiring, by a first user equipment, UE, sidelink communication configuration information sent by a base station through a broadcast system message or a dedicated signalling, wherein the sidelink communication configuration information comprises at least one of: a channel busy rate, CBR, threshold, a unicast link quantity threshold, a quality of service, QoS, flow quantity threshold, a UE sidelink QoS performance threshold, or a QoS performance threshold of each unicast link.

37. The method of claim 35, comprising: acquiring, by the first UE, sidelink radio bearer, SLRB, configuration information in a base station system message or pre-configuration information, wherein the SLRB configuration information comprises at least one of: a bearer configuration index, at least one QoS flow identifier, QFI, associated with a bearer, or at least one QoS configuration profile associated with a bearer.

38. The method of claim 35, comprising: acquiring, by the first UE, sidelink signalling bearer configuration information in a base station broadcast system message or pre-configuration information, wherein the sidelink signalling bearer configuration information comprises at least one of: a signalling bearer identifier, a logic channel identifier, a logic channel priority, a type of signaling associated with a bearer, or a bearer associated signalling priority.

39. The method of claim 35, comprising: acquiring, by the first UE, feedback bearer dedicated bearer configuration parameter in a base station broadcast system message or pre-configuration information, or a feedback bearer dedicated sidelink resource pool.

40. A sidelink communication apparatus, comprising:
a first sending module, which is configured to send sidelink communication assistance information to a base station; and
a first receiving module, which is configured to receive sidelink communication configuration information sent by the base station.

41. A sidelink communication apparatus, comprising:
a second receiving module, which is configured to receive sidelink communication configuration information sent by a first user equipment, UE; and
a second sending module, which is configured to send sidelink communication configuration response information to the first UE.

42. A sidelink communication apparatus, comprising:
an acquisition module, which is configured to acquire sidelink communication configuration information; and
a communication module, which is configured to perform sidelink communication according to the sidelink communication configuration information.

43. A storage medium for storing a computer program which, when executed by a processor, implements the method of any one of claims 1 to 39.
